## Europäisches Patentamt

## European Patent Office

## Office européen des brevets

(19)

(11) Numéro de publication: **0 216 650**
**B1**

(12)
# FASCICULE DE BREVET EUROPEEN

(45) Date de publication du fascicule du brevet:
**31.01.90**

(51) Int. Cl.⁴: **E 06 B 3/96**

(21) Numéro de dépôt: **86401698.5**

(22) Date de dépôt: **30.07.86**

(54) Dispositif d'assemblage de profilés comportant des bras basculant autour d'une zone d'articulation.

(30) Priorité: **01.08.85 FR 8511772**

(43) Date de publication de la demande:
**01.04.87 Bulletin 87/14**

(45) Mention de la délivrance du brevet:
**31.01.90 Bulletin 90/5**

(84) Etats contractants désignés:
**BE CH DE GB IT LI NL**

(56) Documents cités:
**EP-A- 0 075 417**
**AU-B- 514 900**
**FR-A- 2 129 259**
**FR-A- 2 519 388**
**FR-A- 2 528 921**
**FR-A- 2 530 937**
**US-A- 3 638 803**

(73) Titulaire: **CERALNOR: Société Anonyme, Z.I. Nord-Est Rue E. Branly, F-14103 Lisieux Cédex (FR)**

(72) Inventeur: **Poitelon, Patrick, 4, rue des Oeillets, Touques - Deauville 14 (FR)**

(74) Mandataire: **Rodhain, Claude et al, Cabinet Claude Rodhain 30, rue la Boétie, F-75008 Paris (FR)**

ACTORUM AG

## Description

L'invention concerne un dispositif d'assemblage de profilés par exemple perpendiculaires, du type comportant deux bras ayant des faces respectives disposées en regard et montés basculants autour d'une zone d'articulation de l'un par rapport à l'autre formée à l'une de leurs extrémités, munis chacun à l'autre extrémité d'une griffe d'ancrage susceptible d'être éloignée de celle de l'autre bras lorsque l'on écarte lesdits bras en actionnant une vis de commande coopérant avec au moins une surface d'appui prévue sur au moins l'un des deux bras.

On connaît déjà des dispositifs de ce type, destinés à être logés dans une extrémité ouverte d'un profilé creux de sorte que dépassent du profilé seulement les extrémités du dispositif, lesquelles sont adaptées à se loger à l'intérieur d'un profilé par exemple perpendiculaire au premier et muni à cet effet d'une ouverture ou d'un logement de fixation dans au moins l'un de ses flancs. Ces dispositifs sont généralement de forme compliquée et en conséquence, de fabrication relativement onéreuse.

Egalement, on connaît un dispositif de ce type décrit dans le brevet australien No. 514 900, dans lequel les bras comportent dans leurs faces en regard, des évidements symétriques où est logé un organe de rappel sous la forme d'un bloc en matériau élastique, et, sur leurs faces opposées, des surfaces planes destinées à venir lorsque les bras sont écartés à une certaine distance, contre les parois internes de l'un des profilés, ce qui limite parfois de manière indésirable l'écartement de ces bras; l'organe de rappel est inséré dans les évidements des bras, à une certaine distance de leur extrémité, à la manière d'une noix dans un casse-noix; cet organe de rappel est collé aux bras au moyen d'un produit adhésif; de la sorte, l'organe de rappel travaille principalement en extension sauf peut-être à son extrémité la plus proche de celle des bras lorsque ces bras sont écartés, ce qui exerce sur ces derniers une force tendant à les ramener en regard à une certaine distance l'un de l'autre dépendant de l'épaisseur au repos du bloc, force difficile à maîtriser à cause de l'inhomogénéité de la déformation, sans compter le risque de provoquer le décollement du bloc élastique.

On connaît aussi un dispositif d'un type voisin par le document de brevet français publié sous le No. 2 530 937, qui décrit un dispositif à deux bras basculant lorsque l'on actionne un rotor de verrouillage coopérant avec deux surfaces d'appui prévues sur les deux bras, lesquels bras coopèrent par la partie centrale de leurs faces opposées à leurs faces en regard, avec un organe de rappel sous la forme d'un ressort-lame placé dans un boîtier et en appui, dans la région de l'extrémité d'articulation des bras, contre les parois internes de l'un des profilés; ce ressort-lame travaille en extension, et si ses extrémités en appui à l'extérieur des bras sont éloignées des parois internes du profilé lorsque les bras sont rapprochés dans leur zone de jonction des profilés, elles sont contre ces parois externes lorsqu'ils sont éloignés en position de jonction, ce qui limite parfois de manière indésirable l'écartement de ces bras; dans les mêmes faces coopérant avec un organe élastique, les bras comportent à leur extrémité d'articulation des saillies de retenue à des surfaces convexes à contour polygonal logées dans des cavités d'un fourreau rigide dont la paroi externe présente des surfaces de forme correspondante, avec un jeu important pour permettre le basculement des bras mais nuisant naturellement à un bon positionnement de ceux-ci.

L'invention a pour but de créer un dispositif d'assemblage de profilés comportant des bras basculant autour d'une zone d'articulation, remédiant aux inconvénients et notamment à la complexité et au coût élevé de la plupart des dispositifs connus, et concerne à cet effet un dispositif d'assemblage de profilés par exemple perpendiculaires, du type comportant deux bras ayant des faces respectives disposées en regard et montés basculants autour d'une zone d'articulation de l'un par rapport à l'autre formée à l'une de leurs extrémités, munis chacun à l'autre extrémité d'une griffe d'ancrage susceptible d'être éloignée de celle de l'autre bras lorsque l'on écarte lesdits bras en actionnant une vis de commande coopérant avec au moins une surface d'appui prévue sur au moins l'un des deux bras, dispositif caractérisé en ce que, à leur extrémité d'articulation, les bras comportent d'une part, dans leurs faces en regard, des évidements respectifs symétriques où est logé un organe de rappel compressible élastiquement, et d'autre part, dans leurs faces opposées auxdites faces en regard, des surfaces convexes respectives symétriques à profil en arc de circonférence , en ce que l'organe de rappel compressible élastiquement est inséré dans lesdits évidements en bout dans les extrémités d'articulation des bras de manière à être comprimé lorsque les bras sont écartés de telle sorte qu'il exerce alors sur lesdits bras une force de décompression tendant à les ramener en position serrée l'un contre l'autre, et en ce que lesdites extrémités d'articulation sont logées dans une cavité d'un fourreau rigide dont la paroi interne présente des surfaces d'articulation respectives symétriques se faisant vis-à-vis et ayant un profil en arc de circonférence de même rayon que celui des surfaces convexes respectives desdites faces opposées des bras.

Selon une caractéristique avantageuse de l'invention, les deux bras présentent une forme extérieure identique.

Selon une autre caractéristique préférentielle de l'invention, les évidements creusés dans les deux faces respectives disposées en regard débouchent en bout de l'extrémité d'articulation des bras, et, dans la cavité du fourreau dans laquelle sont logées les extrémités d'articulation des bras, est logé également le bloc compressible élastiquement.

D'autres caractéristiques et avantages de l'inventions ressortiront d'ailleurs de la description qui va suivre, se rapportant à des formes de réalisation préférentielles de l'invention données à titre d'exemples non limitatifs et illustrées sur les dessins ci-joints dans lesquels:

la figure 1 est une vue de profil partiellement coupée d'un dispositif selon l'invention en position de repos;

la figure 2 est une vue de profil du dispositif de la figure 1 en position d'assemblage de deux profilés;

la figure 3 est une section transversale montrant un profilé dans lequel est introduit un dispositif selon une variante de réalisation de l'invention;

la figure 4 est une coupe longitudinale du profilé et du dispositif de la figure 3;

la figure 5 est une vue en perspective explosée de deux profilés dont l'une comporte un dispositif selon la variante des figures 3 et 4 dans sa position d'assemblage des profilés.

Le dispositif d'assemblage représenté sur les dessins, dans ses deux formes de réalisation, est un pion destiné à être logé dans une extrémité ouverte d'une pièce A, telle qu'un profilé creux, de telle sorte que dépassent de cette première pièce A seulement des griffes d'ancrage prédominentes, lesquelles sont adaptées à se loger à l'intérieur d'une autre pièce B telle qu'un profilé perpendiculaire à la première pièce, munie à cet effet d'une ouverture ou d'un logement de fixation dans au moins l'un de ses flancs.

Ce dispositif est du type écarteur à bras articulés 1, 2 montés basculants autour de leurs zones d'articulation, logés, comme on l'a vu pour partie dans la première pièce A et pour partie dans la seconde, et les griffes d'ancrage 11, 21 sont réalisées à des extrémités respectives de solidarisation des bras 1, 2 à la seconde pièce B. Ces griffes d'ancrage sont munies de surfaces de contact 110, 111, 210, 211 avec cette seconde pièce, destinées à permettre un certain serrage des griffes 11, 21 contre les parois internes de celle-ci. Les bras 1, 2 qui ont une forme extérieure identique comportent des moyens d'articulation dans un fourreau 3 rigide commun, qui seront décrits dans la suite; des moyens de commande d'écartement des extrémités de solidarisation des bras confèrent à ceux-ci une mobilité entre une position de repos dans laquelle les extrémités de solidarisation sont rapprochées et une position de solidarisation à la deuxième pièce dans laquelle elles sont éloignées et en contact serré avec les parois internes de cette seconde pièce B.

Les moyens d'articulation sont prévus dans une zone d'articulation située aux extrémités des bras qui sont opposées aux extrémités de solidarisation, et les moyens de commande d'écartement des bras et des extrémités de solidarisation sont positionnés et agissent entre les extrémités opposées des bras, c'est-à-dire entre les moyens d'articulation et les extrémités de solidarisation.

Plus précisément, les bras 1, 2 sont des plaques sensiblement rectangulaires présentant une section longitudinal sensiblement identique sur toute leur largeur, disposées superposées de manière que deux de leurs faces 12, 22 soient disposées en regard sur toute leur étendue et que leurs chants de bout comme leurs chants latéraux soient en affleurement.

Les faces 12, 22 qui sont placées en regard seront désignées par le terme «faces internes» dans la suite de l'exposé, tandis que les faces opposées 13, 23 seront désignées par le terme «faces externes».

Les moyens d'articulation comportent, sur les faces externes 13, 23 des bras 1, 2, une surface cylindrique convexe 131, 231 ayant un profil en arc de circonférence s'étendant jusqu'en bout de l'extrémité d'articulation des bras, raccordée au chant de bout 14, 24 du bras, lequel est perpendiculaire à la face interne 12, 22; de l'autre côté, la surface cylindrique convexe 131, 231 se prolonge par une autre surface cylindrique 132, 232, concave celle-là, à profil en arc de circonférence de rayon sensiblement égal mais de concavité inversée; cette surface cylindrique concave 132, 232 est raccordée par une surface plane 133, 233 de faible longueur, à la face externe 13, 23 du bras.

Toujours dans la zone d'articulation, chaque bras 1, 2 comporte, creusé dans sa face interne 12, 22, un évidement débouchant en bout de son extrémité d'articulation; cet évidement présente ici un flanc 121, 221 perpendiculaire à cette face 12, 22 et un fond 122, 222 parallèle à la même face et débouchant en bout du bras perpendiculairement au chant de bout 14, 24 de celui-ci.

Les faces internes 12, 22 des bras 1, 2 sont raccordées aux flancs 121, 221 de l'évidement par un plan incliné 123, 223 de faible longueur, et planes depuis ce plan incliné 123, 223 jusqu'à l'extrémité de solidarisation et plus précisément jusqu'au chant de bout 15, 25 de cette extrémité; les faces externes 13, 23 sont également planes, depuis la surface plane 133, 233 de raccordement à la surface cylindrique concave 132, 232 jusqu'à la région des griffes d'ancrage, et ces faces sont légèrement inclinées par rapport aux faces internes, comme cela sera précisé par la suite.

Les extrémités d'articulation des bras sont emboîtées dans un fourreau commun de solidarisation 3 rigide c'est-à-dire ne présentant pas d'élasticité notable, ayant une forme générale parallélépipédique à section sensiblement carrée et de longueur égale à la largeur de la plaque constituant les bras 1, 2 creusé d'une cavité dont la paroi interne présente des surfaces d'articulation sensiblement complémentaires aux suffaces convexes respectives de la zone d'articulation des bras 1, 2 et se faisant donc vis-à-vis, comportant des surfaces cylindriques 31 en creux ayant un profil en arc de circonférence sensiblement de même rayon que celui des surfaces d'articulation des bras; du côté des chants de bout 14, 24 des bras, ces surfaces d'articulation du fourreau rigide sont reliées par une paroi plane 32 légèrement en retrait, déterminant un espace entre elle et ces chants de bout; à l'opposé, la paroi interne de la cavité du fourreau débouche dans une face de la périphérie de celui-ci par des surfaces cylindriques 33 à profil en arc de circonférence de même rayon que les surfaces en creux, mais de concavité inversée, c'est-à-dire en relief vers le plan longitudinal médian du fourreau, de telle sorte que les surfaces cylindriques concaves 132, 232 des bras s'ajustent également dans le fourreau et plus précisément entre les surfaces cylindriques en relief de la cavité de celui-ci, afin que les extrémités d'articulation des bras puissent être emboîtées dans le fourreau et y pivoter, les surfaces cylindriques de celui-ci sont écartées d'une distance très légèrement supérieure à celle qui sépare les régions correspondantes des surfaces d'articulation des bras lorsque ceux-ci sont disposés face contre face; la largeur du fourreau 3 est sensiblement égale à la distance qui sépare les faces externes des bras lorsque les faces internes sont l'une contre l'autre. Lorsque les bras 1, 2 sont emboîtés dans le fourreau rigide 3, leurs évidements creusés dans leurs faces internes déterminent un logement où est inséré un organe de rappel déformable élastiquement sous la forme d'un bloc 4, ici sensiblement parallélépipédique, compressible élastiquement, par exemple en caoutchouc ou analogue, qui est donc également logé dans le fourreau 3; ce bloc 4 assure un bon positionnement l'un contre l'autre des bras dans le fourreau en l'absence d'effort exercé par les moyens de commande d'écartement, et joue le rôle de ressort de rappel chargé et tendant à ramener les bras en position serrée l'un contre l'autre lorsqu'ils sont écartés sous l'action de ces moyens de commande d'écartement par suite du glissement pivotant des bras dans le fourreau grâce au positionnement approprié des diverses surfaces cylindriques 131, 231, 132, 232, 31, 33, les unes par rapport aux autres et à la présence des plans inclinés 123, 223 raccordant les flancs 121, 221 des évidements aux faces internes 12, 22 des bras 1, 2. Lorsque les extrémités de solidarisation des bras sont écartées, le bloc compressible élastiquement 4 est comprimé par les fonds 122, 222 des évidements, et une expansion correspondante est permise grâce au retrait de la paroi plane 32 reliant les surfaces d'articulation du fourreau 3, constituant donc une zone d'expansion du bloc 4. Lorsque les moyens de commande d'écartement sont actionnés en sens inverse de celui provoquant l'écartement, le bloc compressible élastiquement reprend sa forme initiale et provoque effectivement le rapprochement des extrémités de solidarisation des bras.

Des griffes appropriées, d'ailleurs déjà connues en partie, seront décrites succintement en partant de leur zone de contact avec la deuxième pièce B. constituée par une rainure s'étendant sur toute la largeur des bras 1, 2 et en tournant autour de ceux-ci en allant tout d'abord en direction du chant de bout 15, 25 de l'extrémité de solidarisation des profilés. Dans ces conditions, on rencontre successivement une surface de fond de rainure 110, 210 sensiblement parallèle à la face interne du bras, s'étendant donc sur toute la largeur de celui-ci et destinée à venir en contact avec la paroi externe du logement de fixation du profilé B lorsque les griffes sont en position écartée en vue de l'assemblage des profilés A, B, une surface 111, 211 constituant une paroi de la rainure et inclinée à 45° vers l'extérieur du dispositif en allant vers l'extrémité de la griffe, destinée à permettre un positionnement correct par l'apport au profilé B, une surface externe 112, 212 parallèle à la face interne des bras, et un chanfrein 113, 213 à 45° aboutissant à l'extrémité du bras et plus précisément au chant de bout 15, 25 de celui-ci.

Si l'on continue à tourner autour des bras, on rencontre ensuite la face interne 12, 22 du bras à laquelle le chant de bout 15, 25 est perpendiculaire, s'étendant jusqu'à la zone d'articulation, le plan incliné 123, 223 de raccordement à l'évidement, le flanc 121, 221, puis le fond 122, 222 de l'évidement, le chant de bout 14, 24 de l'extrémité d'articulation, la surface cylindrique convexe 131, 231, la surface cylindrique à concavité inverse 132, 232, la face externe 13, 23, et enfin l'autre paroi de la rainure délimitant la griffe du côté de l'extrémité de solidarisation, constituée tout d'abord d'une surface 114, 214 perpendiculaire à face interne du bras et ensuite d'une surface inclinée 115, 215 à 45° symétrique de la paroi opposée 111, 121 de la rainure. On notera que l'inclinaison de la face externe des bras par rapport à la face interne est choisie de telle sorte que lorsque les bras sont en position d'assemblage des profilés donc griffes écartées, les faces externes soient parallèles et écartées d'une distance sensiblement égale à la largeur du fourreau; l'épaisseur des griffes est inférieure à l'épaisseur des bras en n'importe quel point de leur partie inclinée.

Les moyens de commande d'écartement des griffes d'ancrage 11, 21 sont constitués par une vis 5 et au moins une surface d'appui 6 appartenant à au moins l'un des bras 1, 2.

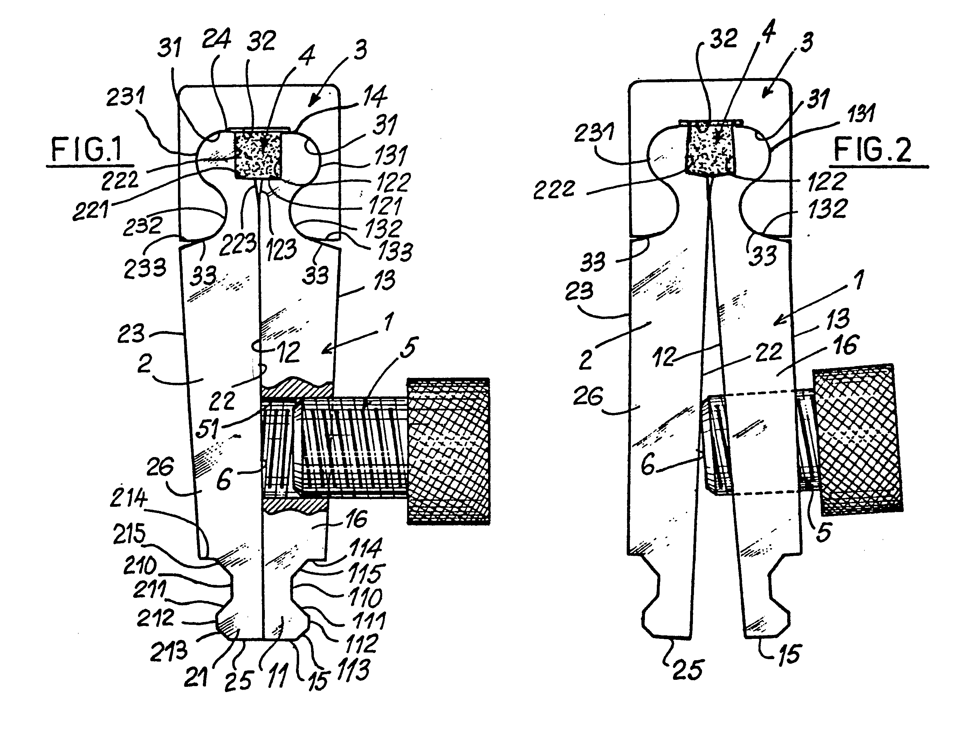

Dans la forme de réalisation du pion représentée sur les figures 1 et 2, la vis 5 est insérée dans un trou taraudé 51 dont l'axe longitudinal est sensiblement perpendiculaire à la face interne du bras 1 et traversant ce bras d'une face à l'autre, et la surface d'appui 6 coopérant avec cette vis constituant l'organe de commande est elle-même constituée par la région de la face interne 22 du bras 2 qui est disposée en regard de l'extrémité de la vis de commande.

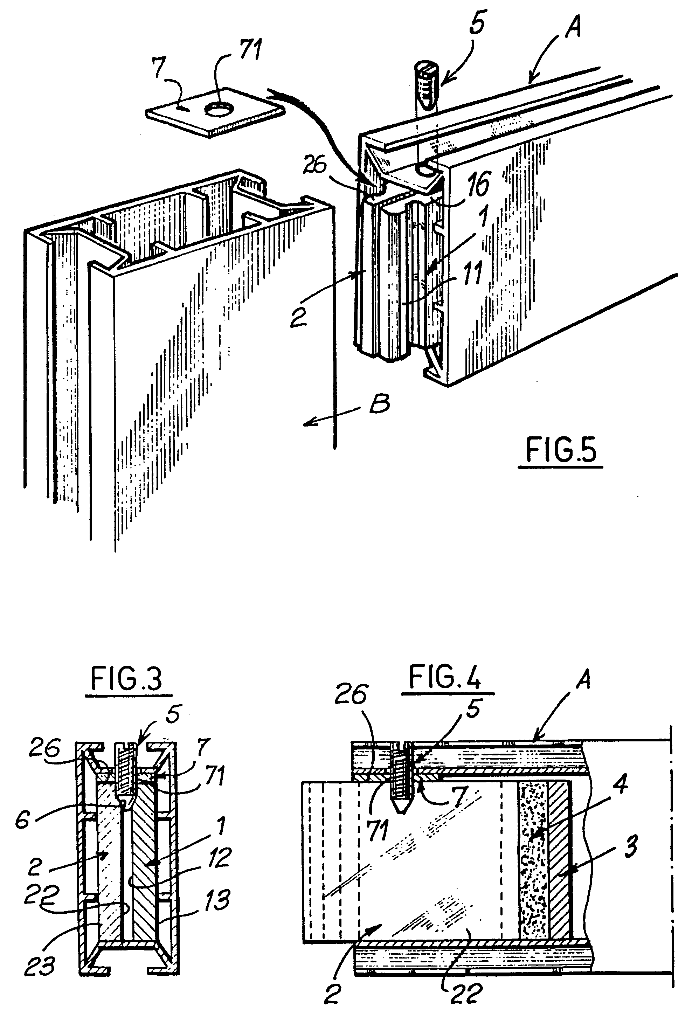

Dans la forme de réalisation du pion des figures 3 à 5, l'organe de commande est constitué par une vis 5 insérée dans une contre-plaque 7 munie d'un trou taraudé 71 la traversant d'une face à l'autre et disposée de telle sorte que l'une de ses faces soit appliquée contre les chants latéraux adjacents des deux bras, à l'intérieur du profilé A. Dans cette forme de réalisation, les surfaces d'appui, prévues sur les faces internes des bras, sont réalisées identiquement dans les deux bras 1, 2; à cet effet, des surfaces demi-cylindriques se faisant vis-à-vis débouchent à la surface de l'un des chants latéraux 16, 26 de chacun des bras et sont prolongées à l'intérieur de ceux-ci par des surfaces demi-tronconiques respectives se faisant également vis-à-vis et constituant les surfaces d'appui 6 de manière à former, lorsque les bras sont plaqués l'un contre l'autre, un trou cylindrique de diamètre légèrement plus grand que celui de la vis de commande d'écartement, se terminant par une partie tronconique destinée à coopérer avec l'extrémité tronconique de la vis de commande; de préférence, cette vis est une vis pointeau, de sorte que son extrémité tronconique soit de relativement grande longueur afin que l'écartement des bras puisse être réglé continuement sur une plage suffisamment étendue.

Dans les deux formes de réalisation, il est nécessaire que le profilé A soit percé d'un trou lisse pour le passage de la vis de commande 5, dans l'une de ses faces dans le cas de la première forme de réalisation, dans un de ses chants dans le cas de la deuxième forme; la vis de commande 5 est naturellement accessible de l'extérieur du profilé A en vue de son actionnement en rotation.

Afin de ne pas avoir à exercer une force trop importante sur la vis, on choisit de préférence la distance de celle-ci à la griffe d'ancrage inférieure à la distance qui la sépare de l'articulation, par exemple de l'ordre de la moitié de cette dernière.

La deuxième forme de réalisation nécessite que la contre-plaque 7 soit disposée dans le profilé A de telle sorte que son trou taraudé 71 soit bien en regard du trou déterminé dans les faces internes des bras.

En vue de son utilisation, après que le fourreau 3 ait été placé autour de son extrémité d'articulation incluant le bloc 4 compressible élastiquement, le dispositif est donc inséré dans l'extrémité ouverte d'un premier profilé A de sorte que dépassent uniquement ses griffes d'ancrage 11, 21; le dispositif est pratiquement immobilisé du fait que ses dimensions hors-tout sont à peine inférieures aux dimensions intérieures du profilé A; la vis de commande d'écartement est alors introduite dans le trou lisse du profilé, sans être suffisamment vissée pour écarter les bras l'un de l'autre; puis les deux profilés A, B à assembler sont approchés et positionnés, les griffes du dispositif étant introduites dans l'ouverture ou le logement de fixation du deuxième profilé B. Les profilés sont maintenus dans le positionnement désiré l'un par rapport à l'autre et la vis de commande 5 est vissée, ce qui écarte les extrémités de solidarisation des bras et éloigne les griffes d'ancrage 11, 21 l'une de l'autre, jusqu'à ce que le serrage désiré soit obtenu; pour démonter les deux profilés A, B il suffit de dévisser la vis 5 de commande, ce qui provoque le rapprochement des griffes 11, 21 sous l'action de décompression du bloc compressible élastiquement 4.

Bien entendu, l'invention n'est pas limitée aux formes de réalisation ci-dessus décrites et représentées, à partir desquelles on pourra prévoir d'autres formes de réalisation sans pour autant sortir du cadre de cette invention; on pourra par exemple prévoir que les bras soient insérés dans l'organe de rappel, qui serait alors logé dans des évidements prévus dans les faces externes des bras, et que l'organe de rappel et le fourreau soient une seule et même pièce; on pourra également prévoir, dans des variantes de la forme de réalisation des figures 3 à 5, d'insérer la contre-plaque 7 non pas appliquée en contact contre les chants latéraux adjacents des deux bras, à l'intérieur du profilé A, mais à l'intérieur d'une glissière prévue dans un chant latéral de ce profilé; on pourra également prévoir de supprimer la contre-plaque, et simplement de tarauder le trou de passage de la vis de commande existant dans le chant du profilé, de telle sorte que ce soit ce trou ainsi taraudé qui coopère avec cette vis de commande.

## Revendications

1. Dispositif d'assemblage de profilés (A, B) par exemple perpendiculaires, du type comportant deux bras (1, 2) ayant des faces respectives disposées en regard et montés basculants autour d'une zone d'articulation de l'un par rapport à l'autre formée à l'une de leurs extrémités, munis chacun à l'autre extrémité d'une griffe d'ancrage (11, 21) susceptible d'être éloignée de celle de l'autre bras lorsque l'on écarte lesdits bras (1, 2) en actionnant une vis de commande (5) coopérant avec au moins une surface d'appui prévue sur au moins l'un des deux bras (1, 2), dispositif caractérisé en ce que, à leur extrémité d'articulation, les bras comportent, d'une part, dans leurs faces en regard, des évidements respectifs symétriques où est logé un organe de rappel compressible élastiquement (4), et d'autre part, dans leurs faces opposées auxdites faces an regard, des surfaces convexes respectives symétriques (131, 231) à profil en arc de circonférence, en ce que l'organe de rappel compressible élastiquement est inséré dans lesdits évidements en bout dans les extrémités d'articulation des bras de manière à être comprimé lorsque les bras sont écartés de telle sorte qu'il exerce alors sur lesdits bras une force de décompression tendant à les ramener en position serrée l'un contre l'autre, et en ce que lesdites extrémités d'articulation sont logées dans une cavité d'un fourreau rigide (3) dont la paroi interne présente des surfaces d'articulation (31) respectives symétriques se faisant vis-à-vis et ayant un profil en arc de circonférence de même rayon que celui des surfaces convexes respectives desdites faces opposées des bras.

2. Dispositif selon la revendication 1, caractérisé en ce que la surface convexe (131, 231) à profil en arc de circonférence de la zone d'articulation de chaque bras (1, 2) est raccordée du côté opposé à l'extrémité d'articulation, à une surface (132, 232) à profil en arc de circonférence de rayon sensiblement égal mais de concavité inversée.

3. Dispositif selon l'une quelconque des revendications 1 et 2, caractérisé en ce que la paroi interne de la cavité est raccordée à la périphérie de la pièce dans laquelle elle est creusée, par des surfaces cylindriques (33) à profil en arc de circonférence de même rayon que lesdites surfaces (31) se faisant vis-à-vis de ladite cavité, mais de concavité inversée.

4. Dispositif selon l'une quelconque des revendications 1 à 3, caractérisé en ce que les deux bras (1, 2) ont une forme extérieure identique.

5. Dispositif selon l'une quelconque des revendications 1 à 4, caractérisé en ce que les évidements creusés dans les deux faces respectives disposées en regard (12, 22) débouchent en bout de l'extrémité d'articulation des bras, et en ce que, dans la cavité du fourreau (3), dans laquelle sont logées les extrémités d'articulation des bras (1, 2), est logé également le bloc compressible élastiquement (4).

6. Dispositif selon l'une quelconque des revendications 1 à 5, caractérisé en ce que les évidements de chaque bras comportent deux parois planes (121, 122, 221, 222) dont l'une est perpendiculaire à la face (12, 22) en regard de l'autre bras, et dont l'autre est parallèle à la même face.

7. Dispositif selon la revendication 5, caractérisé en ce que le bloc compressible élastiquement (4) est de forme parallélépipédique et constitue un ressort chargé lorsque les bras (1, 2) sont écartés afin d'exercer alors un effort de rapprochement de ceux-ci et un rapprochement effectif en cas d'actionnement de la vis de commande d'écartement (5) en sens inverse de celui provoquant l'écartement.

8. Dispositif selon l'une quelconque des revendications 1 à 7, caractérisé en ce que chaque bras (1, 2) présente, en bout de son extrémité d'articulation, un chant plan (14, 24) perpendiculaire à une paroi plane (122, 222) de son évidement pour l'organe de rappel (5).

9. Dispositif selon l'une quelconque des revendications 1 à 8, caractérisé en ce que la cavité comporte une paroi plane (32) entre les surfaces d'articulation (31) à profil en arc de circonférence, cette paroi plane étant en retrait desdites surfaces d'articulation en arc de circonférence afin de constituer une zone d'expansion d'un bloc compressible élastiquement (4).

10. Dispositif selon l'une quelconque des revendications 1 à 9, caractérisé en ce que l'un des bras comporte un trou taraudé (51) dont l'axe longitudinal est sensiblement perpendiculaire à sa face (12) en regard de l'autre bras, destiné à coopérer avec la vis de commande (5), et la région de la face (22) de cet autre bras qui est en regard de la vis de commande constitue ladite surface d'appui (6) pour cette vis.

11. Dispositif selon l'une quelconque des revendications 1 à 9, caractérisé en ce qu'il comporte une contre-plaque (7) munie d'un trou taraudé (71) la traversant d'une face à l'autre, pour la vis de commande (5), en ce que les deux bras (1, 2) présentent des surfaces respectives se faisant vis-à-vis réalisées sous la forme de surfaces demi-cylindrique, débouchant dans l'un de leurs chants latéraux, prolongées à l'opposé desdits chants par des surfaces d'appui (6) demitronconiques se faisant également vis-à-vis, lesdites surfaces demi-cylindrique et demi-tronconique déterminant un trou présentant sensiblement la forme d'un cylindre prolongé par un tronc de cône lorsque lesdites faces en regard (12, 22) respectives sont disposées l'une contre l'autre, en ce que le diamètre dudit cylindre est au moins sensiblement égal à celui de la vis de commande (5), en ce que la contre-plaque (7) est destinée à être disposée de telle sorte que ledit trou taraudé soit en regard dudit trou déterminé dans lesdites faces en regard, et en ce que la vis de commande (5) est une vis pointeau dont le pointeau est adapté à coopérer avec lesdites surfaces d'appui (6) demi-tronconiques pour écarter les bras (1, 2).

12. Dispositif selon la revendication 11, caractérisé en ce que la contre-plaque (7) est insérée dans l'un des profilés (A), l'une de ses faces étant appliquées en contact contre des chants latéraux (16, 26) adjacents des deux bras (1, 2).

13. Dispositif selon la revendication 11, caractérisé en ce que la contre-plaque (7) est insérée dans une rainure prévue dans un chant latéral de l'un des profilés (A).

14. Dispositif selon l'une quelconque des revendications 1 à 9, caractérisé en ce que les deux bras (1, 2) présentent des surfaces respectives se faisant vis-à-vis réalisées sous la forme de surfaces demi-cylindrique, débouchant dans un de leurs chants latéraux, prolongées à l'opposé desdits chants par des surfaces d'appui (6) demi-tronconiques se faisant également vis-à-vis, lesdites surfaces demi-cylindrique et demi-tronconique déterminant un trou présentant sensiblement la forme d'un cylindre prolongé par un tronc de cône lorsque lesdites faces en regard (12, 22) respectives sont disposées l'une contre l'autre, en ce que le diamètre dudit cylindre est au moins sensiblement égal à celui de la vis de commande (5) et en ce que la vis de commande (5) est une vis pointeau dont le pointeau est adapté à coopérer avec lesdites surfaces d'appui (6) semi-tronconiques pour écarter les bras (1, 2) lorsque ladite vis est vissée dans un trou taraudé prévu dans un chant de l'un des profilés (A).

## Patentansprüche

1. Profilverbindungsvorrichtung für z.B. senkrecht zueinander angeordnete Profileisen (A, B) mit zwei Armen (1, 2) mit sich gegenüberliegend angeordneten Rückseiten, die an einem ihrer Enden kippbar zueinander gelagert und am anderen Ende jeweils mit einem klauenförmigen Steg (11, 21) versehen sind, der durch Spreizung der Arme (1, 2) durch Betätigung einer Schraube (5) vom entsprechenden Steg des anderen Armes entfernt werden kann, wobei die Schraube (5) mit mindestens einer Stützfläche auf einem der beiden Arme (1, 2) zusammenwirkt, dadurch gekennzeichnet, dass die Arme an ihrem der Gelenkverbindung zugewandten Ende einerseits mit einer symmetrischen Aussparung zur Aufnahme eines elastisch verformbaren Rückstellgliedes (4) und andererseits auf der gegenüberliegenden Seite jeweils mit einer symmetrischen konvexen Fläche (131, 231) mit kreisbogenförmigem Profil versehen sind, und dass das elastisch verformbare Rückstellglied so in die Aussparungen am Ende der Arme eingesetzt ist, dass es bei Spreizung der Arme zusammengedrückt wird und dadurch auf die Arme eine Gegenkraft ausübt, um sie in ihre Ausgangsstellung zurückzubringen, und dass diese Enden der Arme in einer starren Halterung (3) gelagert sind, deren Innenseite jeweils symmetrische Flächen (31) mit bogenförmigem Profil aufweist, dessen Radius dem der entsprechenden konvexen Flächen am Ende der Arme entspricht.

2. Vorrichtung gemäss Anspruch 1, dadurch gekennzeichnet, dass die konvexe Fläche (131, 231) mit bogenförmigem Profil an dem in der Halterung (3) gelagerten Ende der Arme (1, 2) in eine Fläche (132, 232) mit bogenförmigem Profil mit fast gleichem Radius, aber entgegengesetzter Krümmung übergeht.

3. Vorrichtung gemäss Anspruch 1 oder 2, dadurch gekennzeichnet, dass die Innenseite des Hohlraumes mit der Aussenseite des Teiles, in dem er angebracht ist, durch zylindrische Flächen (33) mit bogenförmigem Profil verbunden ist, das den gleichen Radius wie die Flächen (31) aber eine entgegengesetzte Krümmung aufweist.

4. Vorrichtung gemäss Anspruch 1 bis 3, dadurch gekennzeichnet, dass die beiden Arme (1, 2) äusserlich identisch sind.

5. Vorrichtung gemäss Anspruch 1 bis 4, dadurch gekennzeichnet, dass die in den Flächen (12, 22) vorgesehenen Aussparungen am Ende der Arme sich zum Hohlraum der Halterung hin öffnen, und dass im Inneren der Halterung (3), in der die entsprechenden Enden der Arme (1, 2) gelagert sind, auch das elastisch verformbare Rückstellglied (4) gelagert ist.

6. Vorrichtung gemäss Anspruch 1 bis 5, dadurch gekennzeichnet, dass die Aussparungen an den Armen aus jeweils zwei ebenen Flächen (121, 122, 221, 222) bestehen, von denen je eine senkrecht zur Fläche (12, 22) des Armes und die andere parallel zu dieser Fläche angeordnet ist.

7. Vorrichtung gemäss Anspruch 5, dadurch gekennzeichnet, dass das elastisch verformbare Rückstellglied (4) die Form eines Parallelflachs hat und als eine Feder wirkt, die bei Spreizung der Arme (1, 2) gespannt wird, um eine Gegenkraft zu erzeugen und die Arme in ihre Ausgangsstellung zurückzubringen, wenn die Schraube (5) gelöst und die Spreizwirkung aufgehoben wird.

8. Vorrichtung gemäss Anspruch 1 bis 7, dadurch gekennzeichnet, dass jeder Arm (1, 2) an seinem in der Halterung gelagerten Ende aussen eine zur Innenseite (122, 222) der Aussparung für das Rückstellglied (4) rechtwinklig angeordnete Fläche (14, 24) aufweist.

9. Vorrichtung gemäss Anspruch 1 bis 8, dadurch gekennzeichnet, dass zwischen den Flächen (31) des Hohlraumes eine gegenüber diesen Flächen zurückgesetzte glatte Fläche (32) vorgesehen ist, wodurch ein freier Raum für die Ausdehnung eines elastisch verformbaren Blockes (4) entsteht.

10. Vorrichtung gemäss Anspruch 1 bis 9, dadurch gekennzeichnet, dass einer der Arme ein Innengewinde (51) aufweist, dessen Längsachse im wesentlichen senkrecht zu der dem anderen Arm gegenüberliegenden Fläche (12) verläuft und mit der Schraube (5) zusammenwirkt, und dass der der Schraube (5) gegenüberliegende Bereich der Fläche (22) des anderen Armes dieser Schraube als Auflagefläche (6) dient.

11. Vorrichtung gemäss Anspruch 1 bis 9, dadurch gekennzeichnet, dass sie eine Lochscheibe (7) mit einem Innengewinde (71) zur Aufnahme der Schraube (5) umfasst, und dass die beiden Arme (1, 2) sich gegenüberliegende, halbkreisförmige Vertiefungen aufweisen, die ausgehend von einer der Schmalseiten an ihrem Ende durch kegelförmige, sich gegenüberliegende Auflageflächen (6) verlängert werden, wobei die halbkreisförmigen und kegelförmigen Flächen ein Loch begrenzen, das im wesentlichen die Form eines durch einen Kegelstumpf verlängerten Zylinders hat, wenn die Flächen (12, 22) sich gegenüberliegen, und dass der Durchmesser dieses Zylinders praktisch dem der Schraube (5) gleich ist, und dass die Lochscheibe (7) so angeordnet wird, dass das Innengewinde sich gegenüber dem durch die Flächen (12, 22) gebildeten Loch befindet, und dass die Schraube (5) ein Gewindestift ist, dessen Spitze geeignet ist, mit den kegelförmigen Auflageflächen (6) zusammenzuwirken, um die Arme (1, 2) zu spreitzen.

12. Vorrichtung gemäss Anspruch 11, dadurch gekennzeichnet, dass die Lochscheibe (7) in eines der Profile (A) eingeschoben wird, wobei eine ihrer Seiten mit den Flächen (16, 26) der Arme (1, 2) in Berührung gebracht wird.

13. Vorrichtung gemäss Anspruch 11, dadurch gekennzeichnet, dass die Lochscheibe (7) in eine in einer Seitenfläche eines der Profile (A) vorgesehenen Nut eingeschoben wird.

14. Vorrichtung gemäss Anspruch 1 bis 9, dadurch gekennzeichnet, dass die beiden Arme (1, 2) sich gegenüberliegende, halbkreisförmige Vertiefungen aufweisen, die ausgehend von einer der Schmalseiten an ihrem Ende durch kegelförmige, sich gegenüberliegende Auflageflächen (6) verlängert werden, wobei die halbkreisförmigen und kegelförmigen Flächen ein Loch begrenzen, das im wesentlichen die Form eines durch einen Kegelstumpf verlängerten Zylinders hat, wenn die Flächen (12, 22) sich gegenüberliegen, und dass der Durchmesser dieses Zylinders praktisch dem der Schraube (5) gleich ist, und dass die Schraube (5) ein Gewindestift ist, dessen Spitze geeignet ist, mit den kegelförmigen Auflageflächen (6) zusammenzuwirken, um die Arme (1, 2) zu spreitzen, wenn die Schraube in eine in einer Schmalseite eines der Profile (A) angebrachten Bohrung geschraubt wird.

## Claims

1. A device for assembling profiles (A, B) which are for example perpendicular, which is of the type with two arms (1, 2) having respective sides arranged facing each other, which arms are mounted so as to pivot about an area of articulation of one relative to the other formed at one of their ends, each arm being equipped at the other end with an anchoring jaw (11, 21) capable of being distanced from that of the other arm when the said arms (1, 2) are spaced apart by operating a control screw (5) co-operating with at least one bearing surface provided on at least one of the two arms (1, 2), which device is characterised in that the arms have, at their articulation end, on the one hand, in their facing sides, respective symmetrical recesses where a resiliently compressible return member (4) is lodged, and on the other hand, in their sides opposed to the said facing sides, respective symmetrical convex surfaces (131, 231) having a profile in the shape of a circumference arc; in that the resiliently compressible return member is inserted in the said recesses at the end of the articulation ends of the arms in such a way as to be compressed when the arms are spaced apart so that it then exerts on the said arms a decompression force tending to bring them back into the clamped position one against the other; and in that the said articulation ends are lodged in a cavity of a rigid sleeve (3) whose inner wall has respective symmetrical articulation surfaces (31) which become face to face and have a profile in the shape of a circumference arc with the same radius as that of the respective convex surfaces of the said opposed sides of the arms.

2. A device according to Claim 1, characterised in that the convex surface (131, 231), having a profile in the shape of a circumference arc, of the articulation area of each arm (1, 2) is joined, on the side opposed to the articulation end, to a surface (132, 232) having a profile in the shape of a circumference arc with a substantially equal radius but with reversed concavity.

3. A device according to any one of Claims 1 and 2, characterised in that the inner wall of the cavity is joined to the periphery of the part in which it is hollowed out, by cylindrical surfaces (33) having a profile in the shape of a circumference arc with the same radius as the said surfaces (31) which become face to face with the said cavity, but with reversed concavity.

4. A device according to any one of Claims 1 to 3, characterised in that the two arms (1, 2) are of identical outer shape.

5. A device according to any one of Claims 1 to 4, characterised in that the recesses hollowed out in the two respective sides arranged facing each other (12, 22) open out at the end of the articulation end of the arms; and in that the resiliently compressible block (4) is also lodged in the cavity, of the sleeve (3), in which the articulation ends of the arms (1, 2) are lodged.

6. A device according to any one of Claims 1 to 5, characterised in that the recesses of each arm have two plane walls (121, 122, 221, 222) one of which is perpendicular to the side (12, 22) facing the other arm and the other of which is parallel to the same side.

7. A device according to Claim 5, characterised in that the resiliently compressible block (4) is of parallelepipedal shape and forms a loaded spring when the arms (1, 2) are spaced apart in order to then exert a stress bringing these two arms together and an effective bringing-together when the screw (5) for controlling the spacing is operated in the opposite direction to that which causes the spacing.

8. A device according to any one of Claims 1 to 7, characterised in that each arm (1, 2) has, at the end of its articulation end, a plane edge (14, 24) perpendicular to a plane wall (122, 222) of its recess for the return member (5).

9. A device according to any one of Claims 1 to 8, characterised in that the cavity has a plane wall (32) between the articulation surfaces (31) having a profile in the shape of a circumference arc, this plane wall being withdrawn from the said circumference-arc articulation surfaces in order to form an expansion area for a resiliently compressible block (4).

10. A device according to any one of Claims 1 to 9, characterised in that one of the arms has a threaded hole (51) whose longitudinal axis is substantially perpendicular to its side (12) facing the other arms, which hole is intended to co-operate with the control screw (5), and the region of the side (22) of this other arm which is facing the control screw forms the said bearing surface (6) for this screw.

11. A device according to any one of Claims 1 to 9, characterised in that it has a reinforcing plate (7) equipped with a threaded hole (71), passing through it from one side to the other, for the control screw (5);

in that the two arms (1, 2) have respective surfaces which become face to face, are made in the form of semi-cylindrical surfaces, open out into one of their lateral edges and are extended opposite the said edges by semi-truncated bearing surfaces (6) which also become face to face, the said semi-cylindrical and semi-truncated surfaces defining a hole having substantially the shape of a cylinder extended by a truncated cone when the said respective facing sides (12, 22) are arranged one against the other; in that the diameter of the said cylinder is at least substantially equal to that of the control screw (5); in that the reinforcing plate (7) is intended to be arranged in such a way that the said threaded hole is facing the said hole defined in the said facing sides; and in that the control screw (5) is a needle screw whose point is adapted to co-operate with the said semi-truncated bearing surfaces (6) in order to space apart the arms (1, 2).

12. A device according to Claim 11, characterised in that the reinforcing plate (7) is inserted in one of the profiles (A), one of its sides being applied in contact against adjacent lateral edges (16, 26) of the two arms (1, 2).

13. A device according to Claim 11, characterised in that the reinforcing plate (7) is inserted in a groove provided in a lateral edge of one of the profiles (A).

14. A device according to any one of Claims 1 to 9, characterised in that the two arms (1, 2) have respective surfaces which become face to face, are made in the form of semi-cylindrical surfaces, open out into one of their lateral edges, and are extended opposite the said edges by semi-truncated bearing surfaces (6) which also become face to face, the said semi-cylindrical and semi-truncated surfaces defining a hole having substantially the shape of a cylinder extended by a truncated cone when the said respective facing sides (12, 22) are arranged one against the other; in that the diameter of the said cylinder is at least substantially equal to that of the control screw (5) and in that the control screw (5) is a needle screw whose point is adapted to co-operate with the said semi-truncated bearing surfaces (6) in order to space apart the arms (1, 2) when the said screw is screwed into a threaded hole provided in an edge of one of the profiles (A).

FIG.1

FIG.2

EP 0 216 650 B1

7  71  5  A

26  16  1  11

2  B

**FIG.5**

**FIG.3**  **FIG.4**

26  5  A

26  5  7  7

6  71  4

2  1  71  3

22  12

23  13  2  22